# FASCICULE DE BREVET EUROPEEN

(11) **EP 0 732 987 B1**
(45) Date de publication et mention de la délivrance du brevet: **25.08.1999**
(21) Numéro de dépôt: 95902831.7
(22) Date de dépôt: 05.12.1994
(51) Int. Cl.: B29C 67/00

(54) **PROCEDE ET INSTALLATION POUR LA FABRICATION DE PIECES PAR PHOTOTRANSFORMATION DE MATIERE**
VERFAHREN UND VORRICHTUNG ZUR HERSTELLUNG VON WERKSTÜCKEN DURCH PHOTOTRANSFORMATION VON STOFF
METHOD AND APPARATUS FOR MAKING ARTICLES BY PHOTOPROCESSING A MATERIAL

(30) Priorité: 09.12.1993 FR 9314818
(43) Date de publication de la demande: 25.09.1996
(73) Titulaire: LASER INTERNATIONAL S.A., 54603 Villers-les-Nancy Cédex (FR)
(72) Inventeur: ALLANIC, André-Luc, F-54000 Nancy (FR); MEDARD, Claude, F-54603 Villers-les-Nancy Cédex (FR); SCHAEFFER, Jean-Philippe, F-54700 Atton (FR)
(74) Mandataire: Moncheny, Michel
(86) Numéro de dépôt international: FR9401414
(87) Numéro de publication internationale: WO9515842

(56) Documents cités:
- EP-A- 0 361 847
- EP-A- 0 484 183
- US-A- 5 238 614

## Description

La présente invention concerne un procédé de fabrication de pièces en trois dimensions selon le préambule de la revendication 1 et une installation selon le préambule de la revendication 25.

Ces procédés sont de plus en plus utilisés pour fabriquer des modèles de pièces industrielles et se prêtent particulièrement bien à l'utilisation des informations dont on dispose déjà dans des systèmes informatique de conception assistée par ordinateur (C.A.O.) (voir par example US-A-5 238 614).

D'une façon plus précise, le procédé auquel s'intéresse l'invention peut être défini de la façon suivante :
- on part d'une matière à l'état liquide ou quasi liquide, susceptible de se solidifier sous l'effet de la lumière, par exemple par polymérisation et/ou réticulation (dans le cas d'un monomère ou d'un oligomère) ou encore par frittage (par exemple dans le cas de céramiques) ;
- on dispose une certaine quantité de cette matière dans une cuve et l'on prévoit dans cette cuve un support constitué par un plateau ou une plateforme, destiné à supporter l'objet à fabriquer, des moyens étant prévus pour modifier et régler le niveau de la matière par rapport au support, par exemple en modifiant la position relative en hauteur de la cuve et du support ou en alimentant la cuve en matière à solidifier ;
- on prévoit des moyens adaptés pour éclairer sélectivement des zones prédéterminées de la surface de la matière contenue dans la cuve ;
- on prévoit également des moyens adaptés pour déposer successivement une couche de matière liquide ou quasi-liquide à la surface de chaque couche préalablement solidifiée ;
- et l'on réalise ainsi par couches successives au moins un objet ou une pièce.

Aussi bien en ce qui concerne les procédés que les installations, de nombreuses variantes ont été imaginées et utilisées mais quels que soient les moyens utilisés et les procédés mis en jeu, une difficulté a été rencontrée, qui concerne la mise en place de la couche de matière liquide ou quasi-liquide sur la couche préalablement solidifiée, et qui se traduit en fin de compte par un allongement du cycle élémentaire de fabrication, et donc par un allongement du temps nécessaire à la réalisation de chaque objet.

Cette difficulté provient du fait que quels que soient les moyens utilisés pour mettre en place une nouvelle couche de liquide (râcleur, déversoir, etc...) on ne peut obtenir une bonne qualité de planéité de la couche mise en place, dans un temps très court. Cela résulte des problèmes de mouillage des parties solides, des effets de bord qui se produisent au niveau des discontinuités entre matière liquide et solide, de la formation de ménisques, des phénomènes liés à la relaxation des liquides visqueux, etc...

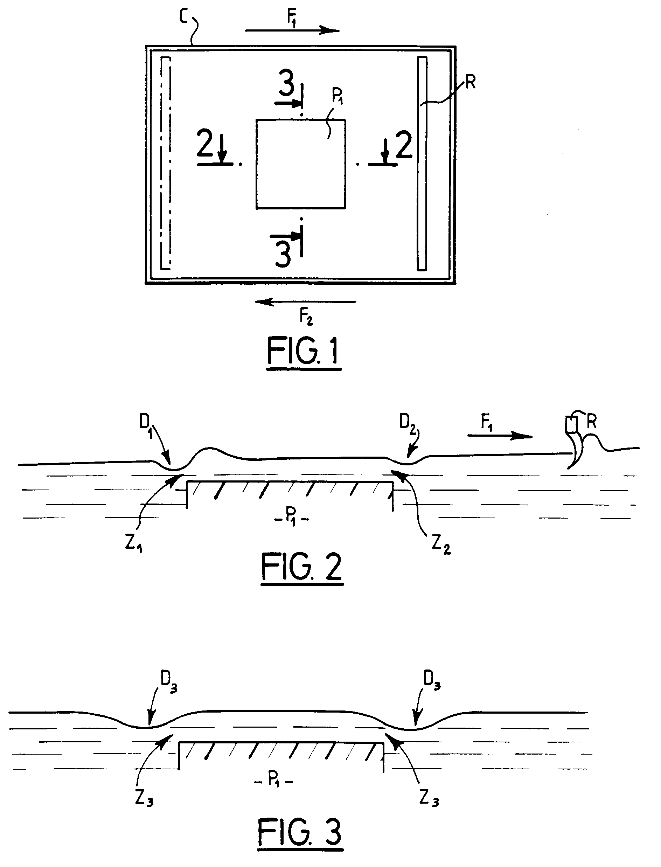

Ces problèmes sont illustrés aux figures 1 à 5 annexées à la présente description et dont la figure 1 représente schématiquement en vue de dessus une cuve C associée à un râcleur R pouvant être animé d'un mouvement de translation suivant les flèches F1 et F2, et dans laquelle est disposée, en cours de fabrication, une pièce P1 qui dans l'exemple choisi a une forme simple parallélépipédique.

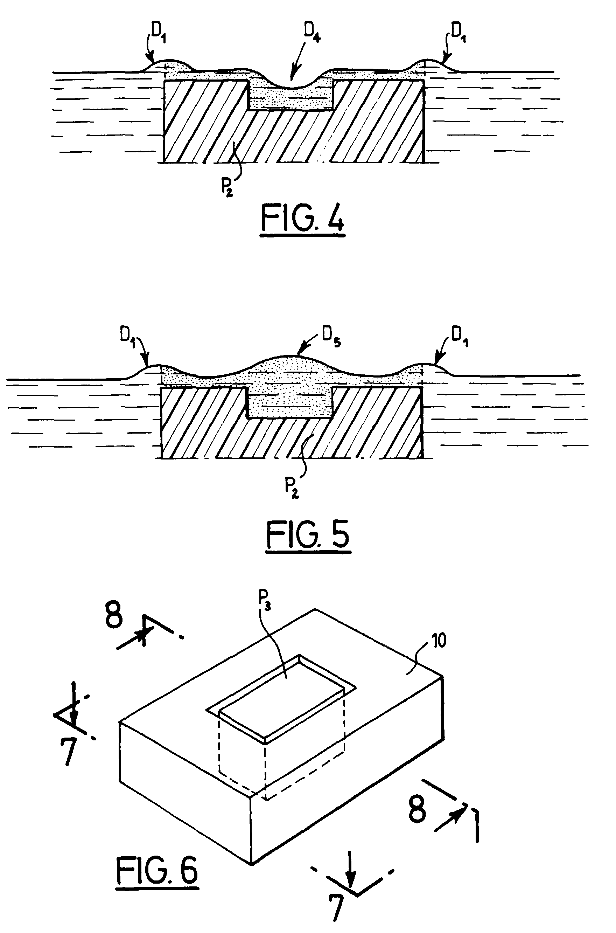

Les figures 2 et 3 représentent respectivement en vue en coupe suivant les lignes 2-2 et 3-3 de la figure 1 les défauts résiduels susceptibles d'être rencontrés et les figures 4 et 5 représentent des vues analogues à celle de la figure 2 dans le cas d'une pièce comportant une partie centrale évidée.

Suivant un procédé connu, lorsqu'une couche de matière a été solidifiée par éclairage d'une zone prédéterminée, on déplace le plateau-support par rapport à la cuve de façon à rapprocher ce plateau du fond de la cuve, d'une hauteur correspondant sensiblement à l'épaisseur de la nouvelle couche que l'on souhaite solidifier sur la pièce en cours de fabrication.

Ce déplacement étant effectué, on déplace un râcleur tel que R dont le bord inférieur est en contact avec la matière liquide, de façon à former une vague de matière et étaler une couche de cette matière sur la couche déjà solidifiée.

On voit sur les figures 2 et 3 le type de défaut résiduel que l'on rencontre après le passage du râcleur, ces défauts D1 étant particulièrement sensibles au niveau de la première zone Z1 de transition liquide-solide rencontrée par le râcleur dans son mouvement de translation. Cette zone de transition Z1 constitue en quelque sorte un "bord d'attaque", tandis que la zone de transition solide-liquide Z2 consitue un "bord de fuite".

Les défauts D2 au niveau du bord de fuite ou D3 le long des zones de transition latérale Z3 (figure 3) sont sensiblement moins marqués mais existent néanmoins. De plus, à chaque inversion du sens de déplacement du râcleur, les bords d'attaque et de fuite sont inversés et des défauts de type D1 apparaîtront finalement des deux côtés de la pièce.

Dans le cas d'une pièce P2 comportant une partie centrale évidée (Fig. 4 et 5), on retrouve les mêmes types de défaut, avec en plus la formation de ménisques concaves D4 (Fig. 4) ou convexes D5 (Fig. 5) dans la zone centrale évidée, si cette dernière a des dimensions relativement faibles. Si par contre ses dimensions sont relativement importantes, on retrouvera au niveau des bords intérieurs d'attaque et de fuite le même type de défaut que dans le cas d'une pièce pleine.

On conçoit que si la phase d'éclairage et de solidification d'une couche intervient alors que la couche de matière liquide présente des défauts tels que ceux représentés aux figures 2 à 5, la pièce obtenue sera de mauvaise qualité puisque l'on solidifiera une couche de matière qui ne sera pas plane et qu'un phénomène d'amplification des défauts se produira au fur et à mesure de l'élaboration des couches successives.

Cela conduit à prévoir en plus de l'opération mécanique d'étalement de la couche de matière liquide, au moyen d'un râcleur, d'un déversoir ou de tout autre dispositif, une phase supplémentaire de relaxation au cours de laquelle les défauts évoqués ci-dessus vont progressivement s'estomper. Cependant, cette phase de relaxation nécessite un temps relativement important, d'autant plus grand que la matière utilisée est plus visqueuse, et peut représenter environ un tiers de la durée d'un cycle complet d'élaboration d'une couche. A titre d'exemple, pour un cycle complet d'une minute, le temps de solidification peut être de l'ordre de 15 secondes et la phase de préparation peut représenter 45 secondes, dont la moitié environ correspondant à la phase de relaxation de la matière.

Un certain nombre de tentatives ont été effectuées pour réduire la durée de cette phase de préparation, mais elles se sont en général soldées par une complexité croissante des dispositifs mis en jeu ou par des difficultés de mise en oeuvre telles qu'elles limitent en fait l'utilisation de ces procédés.

De telles solutions sont notamment décrites dans le document US-A-5 238 614. Suivant les enseignements de ce document, au cours de la fabrication d'une pièce, il est réalisé autour de celle-ci des parois l'entourant partiellement ou totalement. Ces parois sont utilisées en coopération avec un racloir pour faciliter le lissage de la surface d'une couche de liquide préalablement déposée sur la pièce en cours d'élaboration.

Cette solution ne résout que partiellement le problème de la mise en place de la couche de matière liquide.

Il est par ailleurs possible de diminuer la durée de la phase de solidification, par exemple, en augmentant la puissance des sources de lumière, mais en dehors du fait que cette solution est coûteuse, elle est sans incidence sur le temps de préparation et ne procure en fait que des gains de temps relativement minimes.

D'autres solutions sont décrites dans les documents EP-A-0 484 183 et EP-A-0 361 847

Le but de cette invention est donc d'améliorer l'efficacité des procédés et des installations de fabrication d'objets par phototransformation, en diminuant sensiblement le temps nécessaire à la mise en place d'une couche de matière liquide ou quasi-liquide, ce résultat devant par ailleurs être obtenu par des moyens simples et relativement peu coûteux.

Le problème est résolu par le procédé selon la revendication 1 et par l'installation selon la revendication 25.

Des perfectionnements de l'invention font l'object des revendication dependentes.

L'invention va être décrite plus en détail ci-dessous en se référant aux dessins annexés, donnés uniquement à titre d'exemples, et sur lesquels :
Les figures 1 à 5 illustrent les inconvénients de certains procédés connus ;
La figure 6 est une vue schématique en perspective illustrant le procédé selon l'invention ;
Les figures 7 et 8 sont des vues en coupe respectivement suivant les lignes 7-7 et 8-8 de la figure 6 ;
Les figures 9 et 10 sont des vues en coupe dans des plans analogues à ceux des figures 7 et 8, correspondant à une variante ;
Les figures 11 et 12 sont elles aussi des vues analogues à celles des figures 7 et 8 illustrant une autre variante ;
Les figures 13 et 14 sont deux vues schématiques en coupe montrant deux formes de structure de garnissage ou d'enveloppe selon l'invention ;
La figure 15 est une vue en perspective d'une autre forme de pièce ;
Les figures 16 et 17 sont deux vues en coupe, respectivement dans un plan horizontal et dans un plan vertical, montrant un exemple de structure de garnissage selon l'invention, utilisée pour réaliser la pièce de la Fig. 15 ;
La figure 18 est une vue en perspective d'une pièce de forme un peu plus complexe, entourée d'une structure de garnissage selon l'invention ;
La figure 19 est une vue en coupe selon un plan vertical parallèle à la direction de déplacement d'un organe râcleur, illustrant la mise en oeuvre du procédé selon l'invention ;
La figure 20 est une vue en coupe selon un plan vertical perpendiculaire à la direction de déplacement d'un organe râcleur illustrant cette mise en oeuvre;
La figure 21 est une vue partielle schématique montrant une cuve pouvant être utilisée pour mettre en oeuvre le procédé selon l'invention ;
La figure 22 est un schéma illustrant une variante d'installation pouvant être utilisée pour mettre en oeuvre le procédé selon l'invention ;
La figure 23 représente de façon schématique un premier mode de réalisation d'un dispositif de refroidissement ;
La figure 24 est une vue en perspective également schématique représentant un deuxième mode de réalisation d'un tel dispositif de refroidissement.

On ne reviendra pas sur les figures 1 à 5 qui ont été utilisées pour expliquer les inconvénients des procédés constituant l'état antérieur de la technique.

On ne décrira pas davantage ici une installation complète pour la mise en oeuvre du procédé, une telle installation étant bien connue dans la technique et décrite par exemple dans la demande de brevet EP-0416124 publiée le 13.03.91. Le contenu de cette demande peut être considéré comme incorporé à la présente description par référence. Par ailleurs, on connaît également des machines commercialisées par la société 3D SYSTEMES sous les références SLA250 et SLA500 ou par la société EOS GmbH sous les références STEREOS 400 et STEREOS 600.

Une telle installation comprend principalement une cuve contenant la matière à solidifier, un plateau disposé dans cette cuve, pour supporter la pièce que l'on réalise, des moyens pour modifier et régler la position relative en hauteur entre ce plateau et le niveau de la matière à solidifier, des moyens permettant d'éclairer sélectivement des zones prédéterminées de la surface de la matière contenue dans la cuve, afin de solidifier des couches successives de matière, et des moyens pour mettre en place successivement sur chaque couche solidifiée une couche de matière non solidifiée.

On supposera ici que les moyens de mise en place des couches successives de matière non solidifiée comprennent un râcleur pouvant être animé d'un mouvement alternatif de translation suivant une direction horizontale, ce râcleur ayant son bord inférieur en contact avec la matière contenue dans la cuve. Ce râcleur est de préférence souple ou semi-rigide, ses caractéristiques étant choisies, notamment, en fonction de la nature et de la viscosité de la matière utilisée.

C'est ainsi que pour une résine LOCTITE ayant une viscosité d'environ 1000 centipoises à 30° C, on peut utiliser un râcleur constitué d'une feuille de polyéthylène de 0,2 mm d'épaisseur et de 3 cm de hauteur libre, encastrée dans un bras rigide, et dont le bord inférieur est en contact avec le liquide.

Pour une résine Du Pont de Nemours (SOMOS-5100) plus visqueuse (environ 5000 cPoises à 30° C) le râcleur aura une hauteur moins importante (5mm par exemple) et sera donc plus rigide.

Les matériaux utilisés sont également connus dans la technique et visent tous les matériaux organiques susceptibles de durcir, par polymérisation et/ou réticulation, sous l'action de la lumière. On citera, simplement à titre d'exemple, des résines pour stéréolithographie, commercialisées sous les marques LOCTITE 8101 et Du Pont de Nemours SOMOS 5100.

Les matériaux utilisés peuvent aussi se présenter sous forme de pâtes ou poudres très fines, solidifiables par exemple par frittage sélectif sous l'action d'une source de lumière infra-rouge.

Afin d'illustrer le procédé selon l'invention, on a représenté à la figure 6 une pièce simple P3 de forme parallélépipédique, entourée par une structure de garnissage 10 qui enveloppe la pièce sur ses quatres faces latérales.

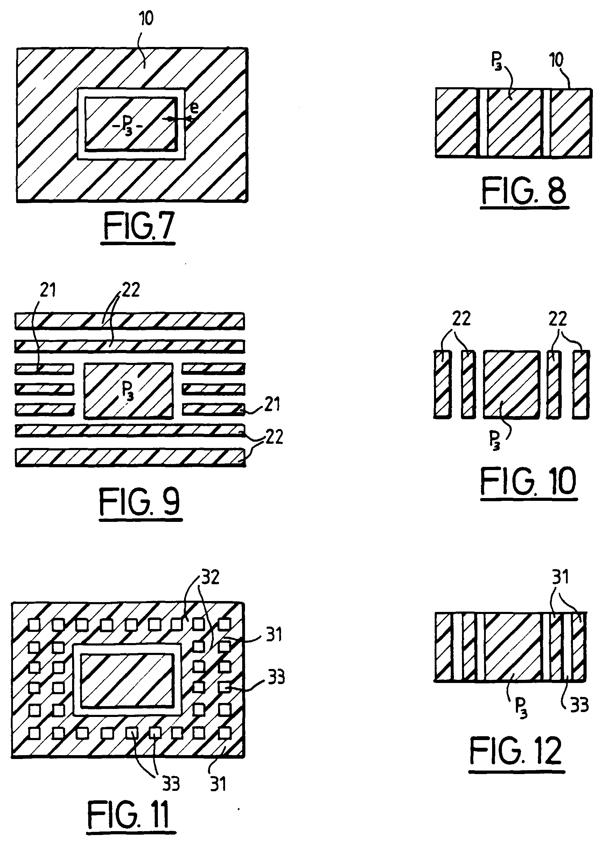

Telle que représentée sur la figure 6 et sur les vues en coupe des figures 7 et 8, la structure de garnissage est constituée par une masse pleine de matière solidifiée, élaborée au fur et à mesure de l'élaboration de la pièce elle-même.

La partie de cette masse qui est la plus proche de la pièce constitue en quelque sorte une enveloppe de cette dernière et en est séparée d'une distance relativement faible e qui dépend de la viscosité de la matière utilisée.

Il est important que la distance e séparant l'enveloppe de la pièce soit suffisamment faible pour éviter que puissent se former des perturbations telles que celles représentées aux figures 2 à 5.

Il est tout aussi important que la distance sur laquelle s'étend la structure de garnissage, autour de la pièce, soit suffisamment grande pour que ces mêmes perturbations représentées aux figures 2 à 5 soient reportées en dehors de la zone dans laquelle se trouve la pièce proprement dite.

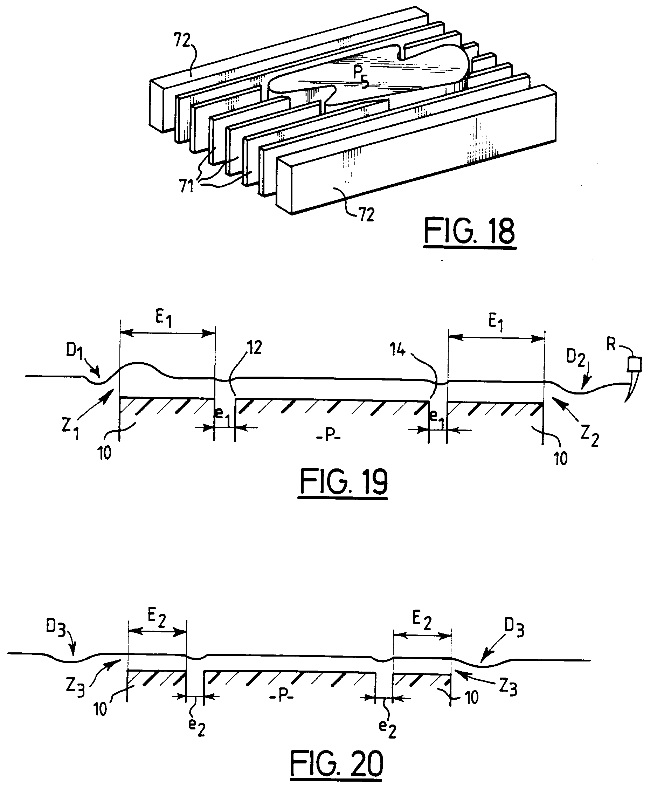

On comprend en effet que grâce à la présence d'une structure de garnissage formant enveloppe autour de la pièce, lors de la mise en place d'une nouvelle couche de matière liquide, par exemple au moyen d'un râcleur, va se produire le phénomène représenté aux figures 19 et 20 qui correspondent respectivement aux figures 2 et 3 illustrant le procédé de l'art antérieur. On voit sur la figure 19 que les perturbations D1, D2 qui se produisent dans les zones de transition liquide-solide Z1,Z2 sont reportées au niveau des bords amont et aval de l'enveloppe 10, tandis que les zones correspondant respectivement aux bords amont 12 et aval 14 de la pièce P sont pratiquement libres de toute perturbation, grâce à la proximité immédiate de l'enveloppe. Les très légères perturbations qui peuvent se produire dans les zones de transition entre l'enveloppe et la pièce sont pratiquement instantanément corrigées sous l'action de la tension superficielle du liquide. Cette tension superficielle a aussi pour effet de limiter l'amplitude du défaut dans cette zone, ce qui va permettre d'en tirer des conséquences quant à la structure même de l'enveloppe, comme cela apparaîtra ci-après.

Il en est de même pour les perturbations D3 qui se produisent dans les zones Z3 le long des bords de la structure de garnissage ou d'enveloppe, qui sont sensiblement parallèles à la direction de déplacement du râcleur (voir Fig. 20).

A titre d'exemple, on a fait figurer sur le tableau ci-dessous des valeurs indicatives des différentes distances significatives à respecter, pour deux matériaux de viscosités différentes.

Dans ce tableau :
- e1 désigne la distance séparant l'enveloppe 10 de la pièce P, suivant la direction parallèle à la direction de déplacement du râcleur ;
- e2 désigne la distance séparant l'enveloppe de la pièce, suivant la direction perpendiculaire à la direction de déplacement du râcleur ;
- E1 désigne la largeur de l'enveloppe 10, suivant la direction parallèle à la direction de déplacement du râcleur ;
- E2 désigne la largeur de l'enveloppe 10, suivant la direction perpendiculaire à la direction de déplacement du râcleur.

| Matériau | LOCTITE (stereolithography resin 8101) | DUPONT (SOMOS 5100) |
|---|---|---|
| Viscosité (à 30°) | environ 1000 cPoises | environ 5000 cPoises |
| E1 | > 1 cm | > 2 cm |
| E2 | > 1 mm | > 3 mm |
| e1 | de 0.1 mm à 5 mm | de 0.8 mm à 3 mm |
| e2 | de 0.1 mm à 5 mm | de 0.5 mm à 3 mm |

Il est bien évidemment préférable de maintenir une distance aussi faible que possible entre l'enveloppe que constitue la structure de garnissage, et la pièce, une distance faible garantissant une absence ou une quasi absence de perturbations dans les zones de transition.

On notera également que la largeur de la structure de garnissage peut dans certains cas être plus faible de part et d'autre de la pièce, suivant une direction perpendiculaire à la direction de déplacement du râcleur, les perturbations étant en effet moins importantes dans ces zones latérales que le long des bords amont et aval de la pièce.

Comme on va le voir maintenant, la structure de garnissage peut prendre des configurations très différentes dont seuls des exemples sont représentés.

On a représenté aux figures 9 et 10 une structure formée d'éléments de parois 21, 22 parallèles les uns aux autres et parallèles à la direction de déplacement du râcleur. Ces éléments de paroi discontinus offrent comme avantage de requérir moins de matière, d'offrir une moindre résistance lors de la mise en place de chaque couche liquide successive et donc de moins perturber l'étalement de cette couche au moyen du râcleur. Le risque de formation de bulles est également réduit.

Les différents éléments de paroi ont été présentés séparés les uns des autres et séparés de la pièce. Bien entendu, ces éléments peuvent être reliés les uns aux autres par endroits, pour améliorer la cohésion.

Une peau relativement mince peut être prévue dans la partie de la structure de garnissage la plus proche de la pièce.

De même, certains de ces éléments peuvent être reliés à la pièce, de façon discontinue sans pour autant sortir du cadre de l'invention.

Une telle disposition où un certain nombre de points de contact discrets peuvent exister entre la structure de garnissage et la pièce n'est en aucune façon comparable à des structures de support de la pièce, telles qu'on en utilise dans la technique pour fabriquer des pièces de forme particulière et qui ne permettent pas de réduire de façon sensible les temps de préparation séparant deux phases successives de solidification.

Dans le mode de réalisation représenté aux figures 11 et 12, la structure de garnissage formant enveloppe, vue en coupe dans un plan horizontal (figure 11), a la forme d'une grille, formée d'éléments de paroi 31, 32 perpendiculaires entre eux, dont certains 31 sont parallèles à la direction de déplacement des râcleurs, de sorte que la structure dans son ensemble, comporte des évidements verticaux 33 qui peuvent par ailleurs être continus ou discontinus.

La dimension des parties évidées contenant de la matière non solidifiée, doit être suffisamment faible pour que l'ensemble se comporte comme une surface solide sensiblement homogène et continue, de façon à ne pas provoquer de perturbations notables lors de l'étalement de la couche de liquide.

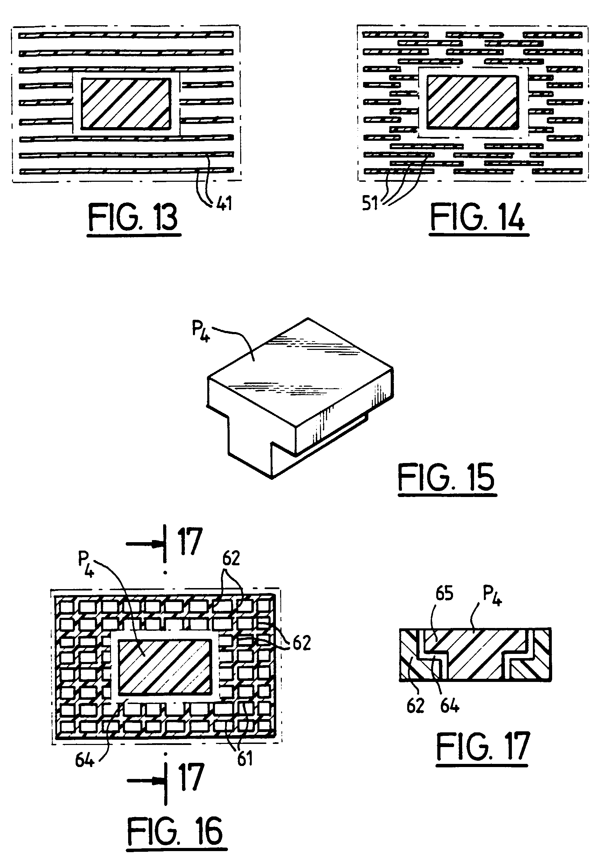

On a représenté à la figure 13 une structure de garnissage constituée comme dans l'exemple des figures 9 et 10 par des éléments de cloison 41 parallèles à la direction de déplacement du râcleur. Dans ce mode de réalisation, la largeur des éléments de cloison est plus faible que dans l'exemple de la figure 9, ce qui a pour effet de présenter un front perpendiculaire au sens de déplacement du râcleur, dont la surface est moins importante, ce qui diminue les chocs lors de l'écoulement du liquide.

Cette diminution des chocs est utile en ce qu'elle diminue ou supprime la formation de petites bulles d'air qui risquent de se retrouver emprisonnées au sein de la pièce solidifiée.

Comme dans le cas de la figure 9, ces éléments de paroi discontinus constituent au voisinage de la pièce une sorte d'enveloppe (indiquée en trait mixte), qui n'est pas continue mais dont l'effet est quasiment le même que dans le cas d'une surface continue. Cela résulte du fait que chaque partie solidifiée de l'enveloppe impose dans son environnement liquide proche une restriction sur les vitesses d'écoulement, de sorte qu'une partie solidifiée correspond en fait à une zone d'influence favorable plus importante que sa propre surface. Il suffit donc que les zones d'influence des différentes parties solidifiées discontinues se recouvrent pour que l'on obtienne un effet comparable à celui obtenu par une surface solidifiée continue de surface plus importante.

Ce principe est mis en application dans le mode de réalisation de la figure 14 où la structure de garnissage est constituée par des éléments de paroi 51 discontinus non seulement dans le sens transversal à la direction de déplacement du râcleur mais aussi dans le sens longitudinal, parallèle à cette direction. L'effet obtenu au moyen de tels éléments de paroi est tout à fait comparable à celui obtenu dans l'exemple des figures 9 ou 13 ou encore dans celui des exemples des figures 7, 8 et 11, 12 dans lesquelles les surfaces solidifiées sont sensiblement plus importantes.

Là encore, les éléments de cloison 51 disposés au voisinage de la pièce constituent une sorte d'enveloppe et permettent d'obtenir la fonction recherchée.

Les zones solidifiées doivent avoir une dimension transversale ou largeur suffisante pour assurer leur stabilité. L'intervalle entre ces éléments de cloison peut être de l'ordre de quelques millimètres, la valeur de cet intervalle dépendant de la viscosité de la matière utilisée.

La figure 15 représente une pièce P4 un peu plus complexe puisqu'elle a une section transversale en en forme de T.

Dans ce cas, la structure de garnissage est conformée de façon à constituer une enveloppe qui épouse le contour de la pièce.

Si, comme représenté aux figures 16 et 17, la structure de garnissage est formée d'une grille en trois dimensions, les éléments tranversaux 62 ont, dans la zone qui correspond à l'emprise de la pièce une section en L, comme représenté sur la figure 17 de façon à ménager entre le contour intérieur de l'enveloppe et la pièce un intervalle 64 d'épaisseur sensiblement constante et ce dans les différentes sections horizontales de la pièce, ainsi qu'au voisinage des parties 65 en surplomb.

Comme dans les exemples précédents, des points de contact peuvent exister entre la structure de garnissage et la pièce sans pour autant sortir du cadre général de l'invention.

La figure 18 représente en vue en perspective une pièce P5 à contour curviligne, associée à une structure de garnissage constituée d'éléments de paroi 71, 72 sensiblement parallèles entre eux et parallèles à la direction de déplacement de l'organe tel qu'un râcleur, utilisé pour répartir et étaler la matière liquide. Dans ce mode de réalisation, les éléments de paroi 72 disposés aux deux extrémités latérales ont une épaisseur plus importante que les éléments de paroi 71 disposés dans la partie centrale.

Ces deux éléments de paroi d'extrémité ont pour fonction supplémentaire de supporter l'essentiel de l'effort exercé par l'organe de répartition du liquide. Cette disposition permet de réaliser des éléments de cloison intermédiaires 71 plus minces, puisqu'ils ne supportent pratiquement pas d'efforts verticaux, de sorte que l'on consomme une quantité de matière plus faible.

Il résulte de ce qui précède que de nombreux modes de mise en oeuvre peuvent être envisagés et en particulier que la structure de garnissage peut prendre des formes très variées, l'essentiel étant que cette structure de garnissage constitue une enveloppe continue ou discontinue, qui épouse sensiblement le contour extérieur et le cas échéant le contour intérieur de la ou chaque pièce fabriquée.

Lorsque la structure de garnissage est formée d'éléments essentiellement discontinus, une peau continue peut être formée dans la partie de cette structure qui se trouve la plus proche de la pièce.

Dans cette hypothèse d'une structure de garnissage discontinue, les dimensions des zones internes à cette structure et qui ne sont pas solidifiées, doivent être adaptées, notamment à l'épaisseur de la couche. Ces dimensions seront d'autant plus grandes que la couche sera plus épaisse. A titre d'exemple, dans le cas d'une grille (Figs. 11 ou 16) les parties non solidifiées pourront avoir une dimension de l'ordre de 5 mm pour une couche d'épaisseur égale à 75 microns, cette dimension étant réduite à 3 mm pour une couche de 15 microns.

Ainsi que cela a déjà été mentionné, des points de contact peuvent être prévus entre la structure de garnissage et la pièce, ces points de contact n'étant cependant pas systématiques et n'ayant donc aucun rapport avec des structures de support telles qu'on en utilise pour la réalisation de certaines pièces de forme particulière.

Par ailleurs, le procédé selon l'invention peut être utilisé en combinaison avec des moyens habituels de support, lorsque la pièce comporte par exemple des parties en surplomb qu'il convient de supporter au moyen de colonnettes ou de moyens équivalents.

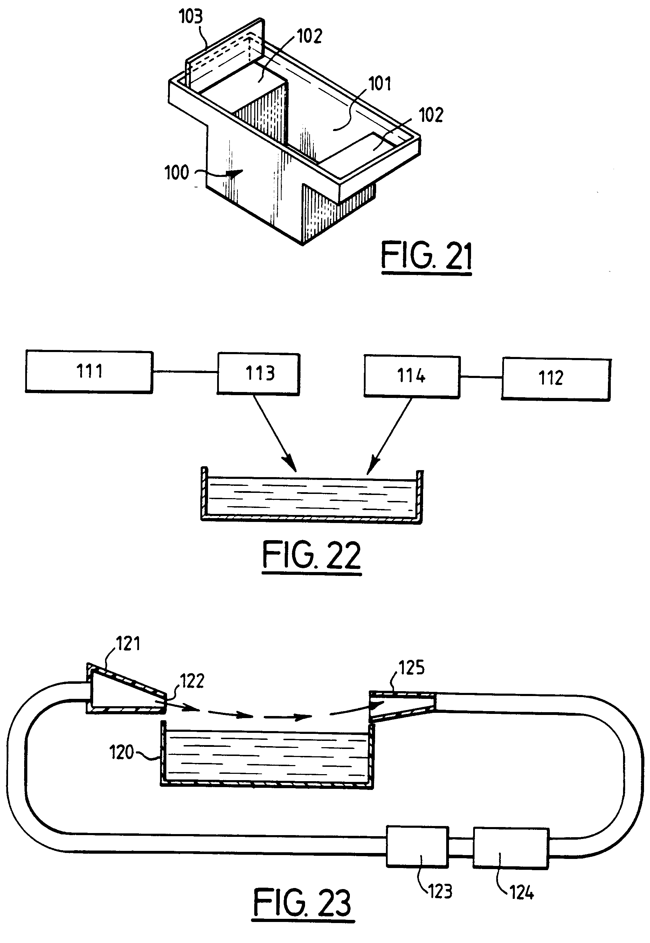

Bien que l'on ne décrive pas en détail une installation permettant de mettre en oeuvre ce procédé, une telle installation étant connue en soi, on va décrire ci-dessous en se référant aux figures 21 à 24 quelques aménagements qui peuvent être apportés à ces installations pour permettre une mise en oeuvre particulièrement efficace du procédé selon l'invention.

On a représenté à la figure 21 de façon schématique une cuve 100 contenant la matière devant être solidifiée pour réaliser une ou plusieurs pièces.

Cette cuve comporte une partie centrale 101 de relativement grande profondeur, dans laquelle est reçu le plateau-support de la pièce (non représenté), et deux parties d'extrémité 102 de profondeur sensiblement moins importante. Ces deux zones d'extrémité permettent à l'organe râcleur 103 d'effectuer une certaine course d'élan et d'atteindre sa vitesse nominale avant de parvenir dans la zone dans laquelle seront réalisées la pièce et son enveloppe.

Cette course d'élan est d'autant plus faible que la matière utilisée est plus visqueuse. Elle peut être de l'ordre de 1 à 5 cm selon la valeur de cette viscosité.

La forme particulière de la cuve représentée à la figure 21 permet d'effectuer cette course d'élan du râcleur et de former une vague de matière liquide d'amplitude suffisante, sans pour autant augmenter de façon très importante le volume total de la cuve et la quantité de matière utilisée.

Bien que l'on utilise de préférence la même source de lumière et d'une façon générale les mêmes moyens pour solidifier la matière constituant la pièce et la structure de garnissage ou d'enveloppe, on peut comme représenté à la figure 22 utiliser des moyens différents pour solidifier d'une part, la pièce et d'autre part, la structure de garnissage.

Dans l'exemple représenté, deux sources lumineuses distinctes 111, 112 sont utilisées ainsi que deux mécanismes 113, 114 de déflexion des rayons émis par ces deux sources.

C'est ainsi que l'on peut utiliser pour réaliser l'enveloppe une source lumineuse 111 constituée par un laser et un mécanisme de déflexion 113 constitué par des miroirs galvanométriques, tandis que l'on utilisera pour réaliser la pièce une source lumineuse 112 qui peut être une lampe à ultraviolets, associée à un autre mécanisme de déflexion 114.

D'une façon générale et quels que soient les moyens d'éclairage utilisés, on s'efforcera de déduire les informations nécessaires à la réalisation de l'enveloppe, des informations déjà disponibles pour réaliser la ou chaque pièce, ce résultat pouvant être obtenu en adaptant en conséquence les programmes utilisés pour la fabrication de chaque pièce.

On a indiqué que l'un des avantages importants de ce procédé réside dans la diminution significative du temps de préparation précédant la phase de solidification de chaque couche lors de l'élaboration d'une pièce. Cette phase de préparation qui dans la technique antérieure a une durée supérieure à 30 secondes peut être ramenée à une durée de quelques secondes (par exemple inférieur à 10 secondes et de préférence inférieur à 5 secondes). Ce gain spectaculaire résulte, d'une part, du fait que la vitesse de déplacement du râcleur peut être plus élevée puisque ce dernier se déplace sur une surface sensiblement continue ou homogène dans toute la zone de fabrication de la pièce et dans son environnement immédiat. De plus, le temps de relaxation qui était auparavant nécessaire est pratiquement totalement éliminé puisque l'on obtient directement après le passage du râcleur une surface sensiblement horizontale, dont les très légers défauts de surface sont rattrapés quasiinstantanément du fait de la tension superficielle du liquide.

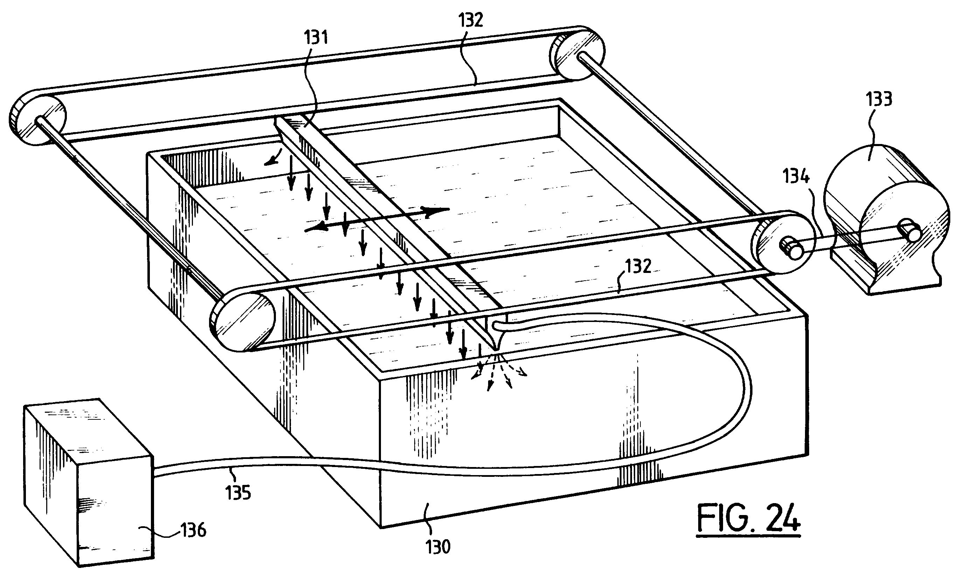

Ce gain de temps a cependant pour effet d'augmenter la fréquence des phases de solidification dont on sait qu'elles provoquent un échauffement de la matière. Il peut donc être souhaitable de refroidir superficiellement la matière contenue dans la cuve ainsi que les parties solidifiées de la pièce et de la structure de garnissage. De tels moyens de refroidissement sont décrits aux figures 23 et 24.

Dans l'exemple de la figure 23, on dispose le long d'un des bords de la cuve 120 un répartiteur 121 qui est muni d'une buse 122 et qui est alimenté en air réfrigéré à partir d'une pompe 123 et d'un échangeur thermique 124. A l'extrémité opposée de la cuve est placé un collecteur 125 qui recueille le gaz de refroidissement et qui le recycle en direction de l'échangeur. Un tel dispositif présente l'avantage d'être fixe.

Dans le mode de réalisation de la figure 24, on utilise un dispositif comportant une réglette mobile 131 qui constitue elle aussi un répartiteur d'air ou de gaz réfrigéré muni d'une buse dirigeant cet air vers la surface de la cuve 130. Cette réglette est portée par deux courroies 132 elles mêmes entraïnées alternativement dans l'un et l'autre sens par un moteur 133 et un dispositif de transmission 134.

La réglette mobile est reliée par un conduit souple 135 à une pompe 136 et elle est alimentée en air froid à partir de cette pompe, elle-même associée si nécessaire à un dispositif de réfrigération.

Les avantages du procédé et d'une installation selon l'invention ont été énoncés dans le corps de cette description.

Un avantage essentiel qui constitue aussi une caractéristique du procédé réside dans la diminution spectaculaire de la durée de la phase de préparation de chaque couche de matière à solidifier.

Cet avantage peut aussi s'accompagner d'une diminution de la puissance de la source lumineuse utilisée pour réaliser la solidification, la durée de cette phase de solidification étant alors légèrement augmentée.

Un autre avantage réside dans la possibilité de réaliser des couches de très faible épaisseur, par exemple inférieures à 50 microns, ce qui est rendu possible par la très grande précision et régularité de la surface de chaque couche.

Cette invention peut être mise en oeuvre indépendamment de la façon dont on effectue la solidification de la matière et avec des installations de caractéristiques très diverses. On peut notamment utiliser plusieurs organes râcleurs parallèles pour étaler les couches successives de matière à solidifier. On peut modifier la position relative du support et de la surface libre de la matière à solidifier, soit en déplaçant l'un par rapport à l'autre ce support et la cuve, soit en alimentant par tout moyen approprié la cuve en matière à solidifier. On peut aussi prévoir que les éléments constituant la grille ont une orientation oblique par rapport à la direction de déplacement d'au moins un organe d'étalement de chaque couche de matière non solidifiée.

## Revendications

1. Procédé de fabrication de pièces en trois dimensions, selon lequel on part d'une matière à l'état liquide, quasi liquide ou en poudre, susceptible de se solidifier sous l'effet de la lumière ; on dispose une certaine quantité de cette matière dans une cuve et l'on prévoit dans cette cuve un support adapté pour supporter l'objet à fabriquer, des moyens étant prévus pour modifier et régler la position relative en hauteur du niveau de la matière à solidifier et du support ; on utilise des moyens adaptés pour éclairer sélectivement des zones prédéterminées de la surface de la matière contenue dans la cuve ; on utilise des moyens adaptés pour déposer successivement une couche de matière non solidifiée à la surface de chaque couche préalablement solidifiée ; on effectue une succession de phases de dépôt d'une couche de matière non solidifiée et de phases de solidification et l'on réalise ainsi par couches successives au soins une pièce, dans lequel au fur et à mesure de l'élaboration de la ou chaque pièce (P), on construit dans au moins une zone qui entoure la ou chaque pièce, et le cas échéant dans au moins une zone libre intérieure à la pièce, au moins une structure de garnissage (10: 21,22; 31,32; 41; 51: 61,62; 71,72) formant enveloppe dont la partie la plus proche de la ou chaque pièce suit sensiblement le contour de cette dernière caractérisé en ce que la partie de l'enveloppe la plus proche de la ou chaque pièce est espacée du contour de cette dernière d'une distance (e; e1, e2) suffisamment faible pour que soit créée au voisinage de la ou chaque pièce une zone de moindre perturbation lors de la mise en place de chaque couche successive de matière non solidifiée.

2. Procédé suivant la revendication 1, caractérisé en ce que la structure de garnissage formant enveloppe s'étend horizontalement autour et le cas échéant à l'intérieur de la pièce sur une distance (E1,E2) suffisante pour que les perturbations qui se produisent lors de la mise en place de chaque couche successive de matière non solidifiée soit reportée en dehors de la zone d'élaboration de la ou chaque pièce.

3. Procédé suivant l'une quelconque des revendications 1 et 2, caractérisé en ce que le temps de préparation d'une couche non solidifiée, ou en d'autres termes le temps séparant la fin d'une phase de solidification du début de la phase de solidification suivante est inférieur à 10 secondes.

4. Procédé suivant la revendication 3, caractérisé en ce que le temps de préparation est inférieur à 5 secondes.

5. Procédé suivant l'une quelconque des revendications précédentes, caractérisé en ce que la structure de garnissage constitue une enveloppe sensiblement continue épousant la forme du contour extérieur et, le cas échéant, intérieur de la ou chaque pièce.

6. Procédé suivant l'une quelconque des revendications 1 à 4, caractérisé en ce que la structure de garnissage possède au moins au voisinage de la ou chaque pièce une surface discontinue dont l'enveloppe épouse sensiblement la forme du contour extérieur et, le cas échéant, intérieur de la ou chaque pièce.

7. Procédé suivant la revendication 6, caractérisé en ce que la structure de garnissage comporte au voisinage de la ou chaque pièce une peau sensiblement continue.

8. Procédé suivant la revendication 5, caractérisé en ce que la structure de garnissage est formée d'une masse pleine.

9. Procédé suivant l'une quelconque des revendications 6 et 7, caractérisé en ce que la structure de garnissage est évidée et présente en section par un plan horizontal la forme d'une grille.

10. Procédé suivant la revendication 9, caractérisé en ce que ladite grille est formée d'éléments disposés respectivement parallèlement et perpendiculairement à la direction de déplacement d'au moins un organe d'étalement de chaque couche de matière non solidifiée.

11. Procédé suivant la revendication 9, caractérisé en ce que les éléments constituant la grille ont une orientation oblique par rapport à la direction de déplacement d'au moins un organe d'étalement de chaque couche de matière non solidifiée.

12. Procédé suivant l'une quelconque des revendications 6 et 7, caractérisé en ce que la structure de garnissage est formée d'éléments de paroi sensiblement parallèles entre eux et parallèles à la direction de déplacement d'au moins un organe d'étalement de chaque couche de matière non solidifiée.

13. Procédé suivant la revendication 12, caractérisé en ce que lesdits éléments de paroi sont de plus discontinus suivant la direction parallèle à la direction de déplacement de l'organe d'étalement de chaque couche de matière non solidifiée.

14. Procédé suivant l'une quelconque des revendications 6 et 7, caractérisé en ce que lorsque la structure de garnissage est formée d'éléments discontinus, il existe certaines liaisons horizontales et/ou verticales entre ces éléments discontinus.

15. Procédé suivant l'une quelconque des revendications précédentes, caractérisé en ce qu'un nombre limité de liaisons discrètes est prévu entre la structure de garnissage et la ou chaque pièce.

16. Procédé suivant l'une quelconque des revendications précédentes, caractérisé en ce que la distance (e; e1, e2) entre la structure de garnissage et la ou chaque pièce est comprise entre 0,1 et 5 mm.

17. Procédé suivant l'une quelconque des revendications précédentes, caractérisé en ce que la largeur (E1,E2) sur laquelle s'étend la structure de garnissage dans un plan horizontal est supérieure ou égale à 1 cm, suivant une direction parallèle à la direction de déplacement d'un organe d'étalement de chaque couche de matière non solidifiée, et supérieure ou égale à 1 mm suivant une direction perpendiculaire à ladite direction de déplacement d'un organe d'étalement de la couche de matière non solidifiée.

18. Procédé suivant la revendication 17, caractérisé en ce que la largeur (E1,E2) dans un plan horizontal, de la structure de garnissage, est d'autant plus importante que la viscosité de la matière utilisée est plus grande.

19. Procédé suivant l'une quelconque des revendications précédentes, dans lequel on utilise un organe (R) du type râcleur, se déplaçant suivant un mouvement de translation, pour étaler chaque couche de matière à solidifier, caractérisé en ce qu'on fait effectuer à cet organe une course d'élan permettant de former une vague de matière à solidifier et d'amener cet organe à sa vitesse de translation choisie avant qu'il entre en contact avec une couche de matière solidifiée.

20. Procédé suivant l'une quelconque des revendications précédentes, caractérisé en ce qu'on utilise les mêmes moyens de solidification, pour constituer les couches successives formant la pièce et la structure de garnissage.

21. Procédé suivant l'une quelconque des revendications 1 à 19, caractérisé en ce qu'on utilise des moyens différents (111,113; 112,114) pour solidifier d'une part les couches de matière constituant la ou chaque pièce et d'autre part les couches de matière constituant la structure de garnissage.

22. Procédé suivant l'une quelconque des revendications précédentes, caractérisé en ce qu'on forme, pour l'élaboration de la pièce et/ou pour l'élaboration de la structure de garnissage, des couches d'épaisseur uniforme.

23. Procédé suivant l'une quelconque des revendications 1 à 21, caractérisé en ce qu'on forme, pour élaborer la ou chaque pièce et la ou chaque structure de garnissage, des couches d'épaisseur irrégulière.

24. Procédé suivant l'une quelconque des revendications précédentes, caractérisé en ce qu'on refroidit la surface de la matière contenue dans la cuve.

25. Installation pour la mise en oeuvre du procédé tel que défini dans l'une quelconque des revendications précédentes, comprenant une cuve dans laquelle est contenue une matière à l'état liquide, quasi liquide, ou à l'état de poudre, susceptible d'être solidifiée sous l'action de la lumière, un support disposé dans ladite cuve, pour supporter la ou chaque pièce fabriquée, des moyens permettant de modifier la position relative en hauteur du support par rapport au niveau de la matière à solidifier, des moyens de solidification d'une couche superficielle de matière, des moyens de mise en place d'une couche de matière non solidifiée au-dessus de chaque couche successive de matière solidifiée, ces derniers moyens comprenant au moins un organe râcleur pouvant être animé d'un mouvement de translation suivant une direction déterminée, caractérisée en ce qu'on utilise une cuve (100) comportant à ses deux extrémités opposées orientées suivant ladite direction de déplacement de l'organe râcleur, deux zones (102,103) de profondeur réduite par rapport à la profondeur de la cuve dans sa partie centrale (101), les deux zones de profondeur réduite contenant cependant de la matière non solidifiée.

26. Installation suivant la revendication 25, caractérisée en ce que lesdites zones constituent des zones de course d'élan pour l'organe formant râcleur.

27. Installation suivant la revendication 25, caractérisée en ce qu'elle est pourvue d'un dispositif de refroidissement de la partie supérieure de la cuve.

28. Installation suivant la revendication 27, caractérisé en ce que le dispositif de refroidissement comprend un répartiteur fixe (121) disposé le long d'un des bords de la cuve (120), et délimitant une buse (122) de projection de fluide de refroidissement, ce répartiteur étant alimenté en fluide de refroidissement à partir d'une pompe (123) et d'un dispositif réfrigérant (124).

29. Installation suivant la revendication 28, caractérisé en ce qu'il est prévu à l'extrémité de la cuve opposée à celle où se trouve le répartiteur, un collecteur d'aspiration (125) relié au dispositif réfrigérant et à la pompe.

30. Installation suivant la revendication 27, caractérisé en ce que le dispositif de refroidissement comprend une réglette mobile (131), disposée au-dessus de la cuve (130) et comportant une buse de projection d'un fluide de refroidissement en direction de la surface de la matière contenue dans la cuve, cette réglette étant reliée à une source de fluide de refroidissement (136).

## Claims

1. Process for manufacturing three-dimensional bodies, according to which one starts with matter in a liquid, a quasi-liquid or powder state, capable of being solidified under the action of light; in which a predetermined quantity of this matter is placed in a vessel and there is provided in this vessel a support adapted to support the object to be manufactured, means being provided for modifying and regulating the relative position in height of the level of the surface of the matter to be solidified and of the support; and means are employed which are adapted to illuminate selectively predetermined zones of the surface of the matter contained in the vessel; means are employed adapted to deposit successive layers of non-solidified matter on the surface of each layer previously solidified; a succession of phases of deposition of a layer of non-solidified matter and of phases of solidification are effected and one thereby produces by successive layers at least one body, and in which successively in the building up of the or each body (P) there is constructed in at least one zone surrounding the or each body and, where appropriate, in at least one free internal zone of the body, at least one reinforcing structure (10; 21, 22; 31, 32; 41; 51; 61, 62; 71, 72) forming an envelope of which the part which is closest to the or each body follows substantially the outline of the latter, characterised in that the part of the envelope which is closest to the or each body is spaced from the outline of the latter by a distance (e; e1, e2) sufficiently small so that there is created in the neighbourhood of the or each body a zone of least disturbance when each successive layer of non-solidified matter is put in place.

2. Process according to claim 1, characterised in that the reinforcing structure forming an envelope extends horizontally around, and where appropriate inside, the body over a distance (E1, E2) sufficient for the disturbances which are produced during the putting into place of each successive layer of non-solidified matter to be shifted outside the zone of building up of the or each body

3. Process according to either one of claims 1 and 2, characterised in that the period of preparation of a non-solidified layer, or in other words the period separating the end of one solidification phase from the start of the following solidification phase is less than 10 seconds.

4. Process according to claim 3, characterised in that the period of preparation is less than 5 seconds.

5. Process according to any one of the preceding claims, characterised in that the reinforcing structure constitutes a substantially continuous envelope following the shape of the external outline and, where appropriate, the internal outline of the or each body.

6. Process according to any one of claims 1 to 4, characterised in that the reinforcing structure has at least in the neighbourhood of the or each body a discontinuous surface of which the envelope follows substantially the shape of the exterior outline and, where appropriate, interior outline of the or each body.

7. Process according to claim 6, characterised in that the reinforcing structure has a substantially continuous skin in the neighbourhood of the or each body.

8. Process according to claim 5, characterised in that the reinforcing structure is formed as a solid mass.

9. Process according to either one of claims 6 and 7, characterised in that the reinforcing structure is hollow and has a section in a horizontal plane in the form of a grid.

10. Process according to claim 9, characterised in that the said grid is formed of elements disposed respectively parallel and perpendicular to the direction of displacement of at least one spreader member for each layer of non-solidified matter.

11. Process according to claim 9, characterised in that the elements constituting the grid have an oblique orientation with respect to the direction of displacement of at least one spreader member for each layer of non-solidified matter.

12. Process according to either one of claims 6 and 7, characterised in that the reinforcing structure is formed of wall elements substantially parallel to one another and parallel to the direction of displacement of at least one spreader member for each layer of non-solidified matter.

13. Process according to claim 12, characterised in that the said wall elements are furthermore discontinuous along a direction parallel to the direction of displacement of the spreader member for each layer of non-solidified matter.

14. Process according to either one of claims 6 and 7, characterised in that when the reinforcing structure is formed of discontinuous elements there exist certain horizontal and/or vertical connections between these discontinuous elements.

15. Process according to any one of the preceding claims, characterised in that a limited number of discrete connections is provided between the reinforcing structure and the or each body.

16. Process according to any one of the preceding claims, characterised in that the distance (e; e1, e2) between the reinforcing structure and the or each body is between 0.1 and 5 mm.

17. Process according to any one of the preceding claims, characterised in that the size (E1, E2) over which the reinforcing structure extends in a horizontal plane is greater than or equal to 1 cm in a direction parallel to the direction of displacement of a spreader member for each layer of non-solidified matter, and greater than or equal to 1 mm in a direction perpendicular to the said direction of displacement of a spreader member for the layer of non-solidified matter.

18. Process according to claim 17, characterised in that the size (E1, E2) in a horizontal plane of the reinforcing structure increases as the viscosity of the matter used increases.

19. Process according to any one of the preceding claims in which there is used a member (R) of the scraper type which is displaced in a translatory movement to spread each layer of material to be solidified, characterised in that this member is caused to follow a path of movement allowing the formation of a wave of matter to be solidified and this member is given a predetermined speed of movement before it comes into contact with a layer of solidified matter.

20. Process according to any one of the preceding claims, characterised in that the same solidification means are used for forming the successive layers which form the body and the reinforcing structure.

21. Process according to any one of claims 1 to 19, characterised in that different means (111, 113; 112, 114) are used for solidifying on the one hand the layers of matter constituting the or each body and on the other hand the layers of matter constituting the reinforcing structure.

22. Process according to any one of the preceding claims, characterised in that, for building up the body and/or for building up the reinforcing structure, layers of uniform thickness are formed.

23. Process according to any one of claims 1 to 21, characterised in that, to build up the or each body and the or each reinforcing structure, layers of irregular thickness are formed.

24. Process according to any one of the preceding claims, characterised in that the surface of the matter contained in the vessel is cooled.

25. Installation for putting into practice the process defined in any one of the preceding claims, comprising a vessel in which is contained a matter in a liquid, quasi-liquid or powder state, capable of being solidified under the action of light, a support arranged in the said vessel for supporting the or each body produced, means allowing modification of the relative position in height of the support with respect to the surface level of the matter to be solidified, means for solidifying the surface layer of matter, means for putting into place a layer of non-solidified matter over each successive layer of solidified matter, these latter means comprising at least one scraper member capable of being put into a translatory movement in a predetermined direction, characterised in that there is employed a vessel (100) having at its two opposite ends orientated in the said direction of displacement of the scraper member, two zones (102,103) of reduced depth with respect to the depth of the vessel at its central part (101), the two zones of reduced depth containing however non-solidified matter.

26. Installation according to claim 25, characterised in that the said zones constitute zones for the path of movement of the member forming the scraper.

27. Installation according to claim 25, characterised in that it is provided with a cooling device on the upper part of the vessel.

28. Installation according to claim 27, characterised in that the cooling device comprises a fixed distributor (121) arranged along one of the sides of the vessel (120), and defining a nozzle (122) for projecting a cooling fluid, this distributor being fed with a cooling fluid from a pump (123) and a refrigerating device (124).

29. Installation according to claim 28, characterised in that it is provided at the end of the vessel opposite that where the distributor is present with a suction device (125) connected to the refrigerating device and to the pump.

30. Installation according to claim 27, characterised in that the cooling device comprises a movable bar (131), arranged above the vessel (130) and having a nozzle for projecting a cooling fluid in the direction of the surface of the matter contained in the vessel, this bar being connected to a source of cooling fluid (136).

## Patentansprüche

1. Verfahren zur Herstellung von dreidimensionalen Werkstücken, bei dem man von einem Material in flüssigem, quasi-flüssigen oder pulverförmigen Zustand ausgeht, das unter Lichteinwirkung aushärtet, eine bestimmte Menge dieses Materials in einen Trog eingibt und in diesem Trog eine Stütze anordnet, die dazu eingerichtet ist, das herzustellende Objekt zu stützen, wobei Mittel zum Ändern und Einstellen der relativen Höhenlage des Spiegels des auszuhärtenden Materials und der Stütze vorgesehen sind, wobei Mittel verwendet werden, die dazu eingerichtet sind, vorbestimmte Zonen der Oberfläche des in dem Trog enthaltenen Material selektiv zu belichten, Mittel verwendet werden, die dazu eingerichtet sind, sukzessiv eine Schicht aus nicht ausgehärtetem Material auf die Oberfläche jeder zuvor ausgehärteten Schicht aufzutragen, wobei Phasen des Auftragens einer Schicht aus nicht ausgehärtetem Material und Aushärtephasen aufeinanderfolgen und man so durch aufeinanderfolgende Schichten wenigstens ein Werkstück herstellt, wobei man nach Maßgabe des Forschritts der Herstellung des oder jedes Werkstücks (P) in wenigstens einer Zone, die das oder jedes Werkstück umgibt, und ggf. in wenigstens einer freien inneren Zone des Werkstücks, wenigstens eine Verkleidungsstruktur (10; 21, 22; 31, 32; 41; 51;61, 62; 71, 72) herstellt, die eine Hülle bildet, deren dem oder jedem Werkstück am nächsten gelegener Teil im wesentlichen der Kontur dieses Werkstücks folgt, dadurch gekennzeichnet, daß der dem oder jedem Werkstück am nächsten gelegene Teil der Hülle zu der Kontur dieses Werkstücks einen Abstand (e; e1, e2) aufweist, der klein genug ist, damit beim Auftragen jeder der aufeinanderfolgenden Schichten aus nicht aus gehärtetem Material in der Nähe des oder jedes Werkstücks eine störungsärmere Zone gebildet wird.

2. Verfahren nach Anspruch 1, dadurch gekennzeichnet, daß die die Hülle bildende Verkleidungsstruktur sich um das Werkstück herum und ggf. im Inneren desselben waagerecht über eine Breite (E1, E2) erstreckt, die so groß ist, daß die Störungen, die beim Auftragen jeder der aufeinanderfolgenden Schichten aus nicht ausgehärtetem Material entstehen, aus der Bildungszone des oder jedes Werkstücks heraus verlagert werden.

3. Verfahren nach Anspruch 1 oder 2, dadurch gekennzeichnet, daß die Zeit zur Bildung einer nicht ausgehärteten Schicht oder mit anderen Worten die Zeit zwischen dem Ende einer Aushärtungsphase und dem Beginn der nachfolgenden Aushärtungsphase kleiner als 10 Sekunden ist.

4. Verfahren nach Anspruch 3, dadurch gekennzeichnet, daß die Zeit für die Bildung der Schicht kleiner als 5 Sekunden ist.

5. Verfahren nach einem der vorstehenden Ansprüche, dadurch gekennzeichnet, daß die Verkleidungsstruktur eine im wesentlichen durchgehende Hülle bildet, die die Form der Außenkontur und ggf. der Innenkontur des oder jedes Werkstücks abformt.

6. Verfahren nach einem der Ansprüche 1 bis 4, dadurch gekennzeichnet, daß die Verkleidungsstruktur wenigstens in der Nachbarschaft des oder jedes Werkstückes eine unterbrochene Oberfläche aufweist, deren Hüllkurve im wesentlichen die Form der Außenkontur und ggf. der Innenkontur des oder jedes Werkstücks abformt.

7. Verfahren nach Anspruch 6, dadurch gekennzeichnet, daß die Verkleidungsstruktur in der Nachbarschaft des oder jedes Werkstücks eine im wesentlichten durchgehende Haut aufweist.

8. Verfahren nach Anspruch 5, dadurch gekennzeichnet, daß die Verkleidungsstruktur massiv ausgebildet ist.

9. Verfahren nach Anspruch 6 oder 7, dadurch gekennzeichnet, daß die Verkleidungsstruktur ausgehöhlt und im waagerechten Querschnitt gitterförmig ist.

10. Verfahren nach Anspruch 9, dadurch gekennzeichnet, daß das Gitter durch Elemente gebildet wird, die parallel bzw. rechtwinklig zur Bewegungerichtung wenigstens eines Ausstreichorgans für jede Schicht aus nicht ausgehärtetem Material angeordnet sind.

11. Verfahren nach Anspruch 9, dadurch gekennzeichnet, daß die Gitterelemente schräg in Bezug auf die Bewegungsrichtung wenigstens eines Ausstreichorgans für jede Schicht aus nicht ausgehärtetem Material angeordnet sind.

12. Verfahren nach Anspruch 6 oder 7, dadurch gekennzeichnet, daß die Verkleidungsstruktur durch Wandelemente gebildet wird, die parallel zueinander und zur Bewegungsrichtung wenigstens eines Ausstreichorgans für jede Schicht aus nicht ausgehärtetem Material sind.

13. Verfahren nach Anspruch 12, dadurch gekennzeichnet, daß die Wandelemente außerdem in der Richtung parallel zur Bewegungsrichtung des Ausstreichorgans für jede Schicht aus nicht ausgehärtetem Material unterbrochen sind.

14. Verfahren nach Anspruch 6 oder 7, dadurch gekennzeichnet, daß, wenn die Verkleidungsstruktur durch diskontinuierliche Elemente gebildet wird, bestimmte waagerechte und/oder senkrechte Verbindungen zwischen diesen diskontinuterlichen Elementen bestehen.

15. Verfahren nach einem der vorstehenden Ansprüche, dadurch gekennzeichnet, daß eine begrenzte Anzahl diskreter Verbindungen zwischen der Verkleidungsstruktur und dem oder jedem Werkstück vorgesehen ist.

16. Verfahren nach einem vorstehenden Ansprüche, dadurch gekennzeichnet, daß der Abstand (e; e1, e2) zwischen der Verkleidungsstrucktur und dem oder jedem Werkstück zwischen 0,1 und 5 mm beträgt.

17. Verfahren nach einem der vorstehenden Ansprüche, dadurch gekennzeichnet, daß die Breite (E1, E2), über die sich die Verkleidungsstruktur in einer waagerechten Ebene erstreckt, in einer Richtung parallel zur Fortbewegungsrichtung eines Ausstreichorgans für jede Schicht aus nicht ausgehärtetem Material größer oder gleich 1 cm und in einer Richtung senkrecht zu dieser Bewegungsrichtung einer Ausstreichorgans für die Schicht aus nicht ausgehärtetem Material größer oder gleich 1 mm ist.

18. Verfahren nach Anspruch 17, dadurch gekennzeichnet, daß die Breite (E1, E2) der Verkleidungsstruktur in einer waagerechten Ebene um so größer ist, je größer die Viskosität des verwendeten Materials ist.

19. Verfahren nach einem der vorstehenden Ansprüche, bei dem zum Ausstreichen jeder Schicht aus auszuhärtendem Material ein translationsbewegliches Rakelorgan (R) verwendet wird, dadurch gekennzeichnet, daß man diese Rakelorgan eine Anlaufstrecke durchlaufen läßt, die es gestattet, eine Welle aus auszuhärtendem Material zu bilden und das Rakelorgan mit seiner gewählten Translationsgeschwindigkeit weiter zu bewegen, bevor es mit einer Schicht aus ausgehärtetem Material in Berührung kommt.

20. Verfahren nach einem der vorstehenden Ansprüche, dadurch gekennzeichnet, daß man zur Herstellung der aufeinanderfolgenden Schichten, die das Werkstück und die Verkleidungestruktur bilden, dieselben Aushärtungsmittel verwendet.

21. Verfahren nach einem der Ansprüche 1 bis 19, dadurch gekennzeichnet, daß man unterschiedliche Mittel (11, 113; 112, 114) verwendet, um einerseits die Materialschichten, die das oder jedes Werkstück bilden, und andererseits die Materialschichten, die die Verkleidungsstruktur bilden, auszuhärten.

22. Verfahren nach einem der vorstehenden Ansprüche, dadurch gekennzeichnet, daß man zur Herstellung des Werkstücks und/oder zur Herstellung der Verkleidungsstruktur Schichten mit einheitlicher Dicke bildet.

23. Verfahren nach einem der Ansprüche 1 bis 21, dadurch gekennzeichnet, daß man zur Herstellung des oder jedes Werkstücks und der oder jeder Verkleidungsstruktur Schichten mit ungleichförmiger Dicke bildet.

24. Verfahren nach einem der vorstehenden Ansprüche, dadurch gekennzeichnet, daß die Oberfläche des in dem Trog enhaltenen Materials gekühlt wird.

25. Vorrichtung zur Durchführung des Verfahrens nach einem der vorstehenden Ansprüche, mit einem Trog, in dem ein Material in flüssigem, quasi-flüssigen oder pulverförmigen Zustand enthalten ist, das unter Lichteinwirkung aushärtet, einer in dem Trog angeordneten Stütze zur Stützung des oder jedes hergestellten Werkstücks, Mitteln, die es gestatten, die Höhe der Stütze relative zum Spiegel den auszuhärtenden Materials zu verändern, Mitteln zum Aushärten einer Oberflächenschicht des Materials, Mitteln zum Auftragen einer Schicht aus nicht ausgehärtetem Material auf jede aufeinanderfolgende Schicht aus ausgehärtetem Material, wobei diese letzteren Mittel wenigstens ein Rakelorgan aufweisen, das zu einer Translationsbewegung in einer bestimmten Richtung angetrieben werden kann, dadurch gekennzeichnet, daß man einen Trog (100) verwendet, der an seinen in Fortbewegungerichtung des Rakelorgans entegengesetzten Enden zwei Zonen (101, 102) aufweist, deren Teife gegenüber der Tiefe des Troges in seinem mittleren Bereich (101) verringert ist, wobei die beiden Zonen mit verringerter Tiefe jedoch das nicht ausgehärtete Material enthalten.

26. Vorrichtung nach Anspruch 25, dadurch gekennzeichnet, daß die genannten Zonen Anlaufstrecken für das Rakelorgan bilden.

27. Vorrichtung nach Anspruch 25, dadurch gekennzeichnet, daß sie eine Kühleinrichtung für den oberen Teil des Troges aufweist.

28. Vorrichtung nach Anspruch 27, dadurch gekennzeichnet, daß die Kühleinrichtung einen festen Verteiler (121) aufweist, der längs eine der Ränder des Troges (120) angeordnet ist und eine Düse (122) zum Ausstoß von Kühlfluid begrenzt, wobei der Verteiler aus einer Pumpe (123) und einem Kühlaggregat (124) mit Kühlfluid gespeist wird.

29. Vorrichtung nach Anspruch 28, dadurch gekennzeichnet, daß an dem Ende des Troges, der dem Ende entgegengesetzt ist, an dem sich der Verteiler befindet, ein Ansaug-Sammler (125) vorgesehen ist, der mit dem Kühlaggregat und der Pumpe verbunden ist.

30. Vorrichtung nach Anspruch 27, dadurch gekennzeichnet, daß die Kühleinrichtung eine bewegliche Leiste (131) aufweist, die oberhalb des Troges (130) angeordnet ist und eine Düse zum Ausstoß eines Kühlfluids in Richtung auf die Oberfläche des in dem Trog enthaltenen Materials aufweist, wobei diese Leiste mit einer Kühlfluidquelle (136) verbunden ist.
